(19) Europäisches Patentamt / European Patent Office / Office européen des brevets

(11) **EP 2 067 120 B1**

(12) **EUROPEAN PATENT SPECIFICATION**

(45) Date of publication and mention of the grant of the patent:
**27.07.2016 Bulletin 2016/30**

(51) Int Cl.:
***G06T 1/00*** *(2006.01)*

(21) Application number: **07826442.1**

(86) International application number:
**PCT/IB2007/053785**

(22) Date of filing: **19.09.2007**

(87) International publication number:
**WO 2008/038187 (03.04.2008 Gazette 2008/14)**

(54) **CREATION AND HANDLING OF A BITSTREAM COMPRISING VIDEO FRAMES AND AUXILIARY DATA**

ERZEUGUNG UND BEHANDLUNG EINES BITSTROMS, DER VIDEOEINZELBILDER UND HILFSDATEN UMFASST

CRÉATION ET GESTION D'UN FLUX BINAIRE CONTENANT DES IMAGES VIDÉO ET DES DONNÉES AUXILIAIRES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.09.2006 EP 06121303**

(43) Date of publication of application:
**10.06.2009 Bulletin 2009/24**

(73) Proprietor: **AMBX UK Limited**
**Redhill**
**Surrey RH1 1FH (GB)**

(72) Inventors:
- **BERKVENS, Winfried, A., H.**
**5656 AE Eindhoven (NL)**
- **VAN LEEST, Adriaan J.**
**5656 AE Eindhoven (NL)**

(74) Representative: **Turner, Richard Charles**
**29 Southcourt Avenue**
**Leighton Buzzard**
**Bedforshire  LU7 2QD (GB)**

(56) References cited:
**EP-A- 1 204 277      WO-A-01/65833**
**WO-A-03/089100      US-A1- 2001 036 203**

- **BILL MEGALOS: "Edit and Create Subtitles in Apple FCP" STUDIO MONTHLY, [Online] 1 July 2006 (2006-07-01), pages 1-4, XP002482485 Retrieved from the Internet: URL:http://www.studiodaily.com/studiomonthly/tutorials/howtutorials/6780.html>[retrieved on 2008-06-02]**

**Description**

This invention relates to a method of and a device for creating a bitstream, and to a method of and system for handling the bitstream, and to the bitstream itself and to a record carrier (such as a DVD) for storing the bitstream. The invention provides an embedding method for embedding user data in MPEG video frames that can survive the decoding step and an analogue data path.

When video data is delivered for rendering, for example, in a television system, then a signal is transferred which includes the video data (normally with audio data). In many environments, some form of additional data is also included in the signal. For example, in a digital television system, it is common for the signal to include a data portion, which includes such things as electronic programme guides and interactive applications, which the end user receives and can access at the same time as watching the video component of the signal.

It is also known to include data directly in the video signal. Known methods of marking a video signal are disclosed in International Patent Application Publication WO 93/00769 and European Patent Application Publication EP 0 518 616. The known methods modify a video signal such that certain disturbances in the picture are introduced upon playback. It is also known to mark a video signal by adding data to the signal. One method is to accommodate data in the vertical blanking interval (as used by Teletext, for example). Another method is to blank a rectangular picture portion and replace said picture portion by a sequence of white and black spots that can be detected by a photodiode in front of the picture tube.

United States Patent US5940134 discloses a method and arrangement for marking a video or audio signal to assign a classification to said signal, for example, to identify that the signal is authentic and may not be copied. The signal comprises at least two components (Y, UV) according to a predetermined standard (MPEG, PAL, NTSC). According to the disclosure of this document, values are assigned to the components, which in combination can normally not occur. For example, in black picture portions where Y, U and V are all zero, U and/or V are now wilfully made non-zero to constitute the watermark. Television receivers still display the black portion. The watermark is not lost when the signal is re-encoded and copied on a recordable disc.

This prior art patent describes the possibility of encoding user-data in black video portions. It describes the possibility to encrypt this user-data in the colour information (chrominance) of a video frame without the consumer noticing this, while the intensity (luminance) of each of the pixels in this frame is set to zero. In this way a black portion is shown to the user.

European Patent Application EP1204277A2 discloses how a data file containing metadata is synchronized with associated audio/video data by subliminally embedding a key in a frame of the audio/video With the introduction of novel systems for augmenting video playback, such as amBX for home cinema (see www.amBX.com), it becomes possible to render extra effects (such as additional lighting) in conjunction with, for instance audio/video (AV) content playback, to enlarge the experience of, for example, watching television for the consumer. To be able to create these effects, a script to be used in the augmenting of this AV content is required to be available.

A significant problem with respect to showing these augmenting effects in concurrency with the playback of AV content is the fact that the augmenting script for a specific AV content has to be available at the rendering location. For example, if the user is watching DVD on a conventional DVD player, access to and execution of the augmenting scripts has to be arranged. Particularly in cases where no connection to the Internet is present, some method of assisting the distribution of the augmenting scripts is required.

Besides this it is of course also possible to distribute the user-data via some other distribution medium, which however requires the availability of this medium. Another option would be the inclusion of a particular user-data file on the disc. This however requires the adaptation of disc-formats, disc-player devices, and probably also the external interface of disc-player devices.

As acknowledged above, data can be included in the video stream directly, but all of the known systems require some amendment to the receiving device so that the data (such as the augmenting scripts) can be accessed and retrieved from the signal and/or some amendment is needed to the original device which is encoding the video data into a form to be carried by the ultimate signal and/or only a relatively small amount of data is included in the image.

It is therefore an object of the invention to improve upon the known art.

According to a first aspect of the present invention, there is provided a method of creating a bitstream comprising receiving video data, receiving auxiliary data, translating said auxiliary data according to a defined scheme, the defined scheme comprising converting the auxiliary data into a plurality of levels, each level corresponding to one of a predefined list of levels and converting the plurality of levels into a predetermined number of DCT positions comprised in a DCT block, encoding the translated auxiliary data as one or more video frames, each frame consisting of the encoded translated auxiliary data or the encoded translated auxiliary data and a logo or similar message applied to a very small portion of the frame, and combining the video data and the encoded video frames into a bitstream.

According to a second aspect of the present invention, there is provided a device for creating a bitstream comprising a video buffer arranged to receive video data, a storage device arranged to receive auxiliary data, a processor arranged to translate said auxiliary data according to a defined scheme, the defined scheme comprising converting the auxiliary data into a plurality of levels, each level corresponding to one of a predefined list of levels and converting the plurality of levels into a predetermined number of DCT positions comprised in a DCT block and to encode the translated auxiliary data as one or more video frames, each frame consisting of the encoded translated auxiliary data or the encoded translated auxiliary data and a logo or similar message applied to a very small portion of the frame, and a transmitter arranged to combine the video data and the encoded video frames into a bitstream.

According to a third aspect of the present invention, there is provided a method of handling a bitstream comprising receiving a bitstream, said bitstream comprising a plurality of encoded video frames, executing an extraction process on the video frames, each frame consisting of encoded translated auxiliary data or encoded translated auxiliary data and a logo or similar message applied to a very small portion of the frame, the extraction process comprising decoding the auxiliary data from the video frames by converting the video frames into a series of DCT blocks, converting the series of DCT blocks into a plurality of levels, each level corresponding to one of a predefined list of levels and converting the plurality of levels, each level corresponding to one of a predefined list of levels, into the auxiliary data.

According to a fourth aspect of the present invention, there is system for handling a bitstream comprising a receiver arranged to receive a bitstream, said bitstream comprising a plurality of encoded video frames, a video decoder arranged to decode the video frames, a display device arranged to display the video frames, and a processor arranged to execute an extraction process on the video frames, each frame consisting of encoded translated auxiliary data or encoded translated auxiliary data and a logo or similar message applied to a very small portion of the frame, the extraction process comprising decoding the auxiliary data from the video frames by converting the video frames into a series of DCT blocks, converting the series of DCT blocks into a plurality of levels, each level corresponding to one of a predefined list of levels and converting the plurality of levels, each level corresponding to one of a predefined list of levels, into the auxiliary data.

Owing to the invention, it is possible to provide a method of including a relatively large amount of auxiliary data directly in a video bitstream which can be received by a legacy device, such as a standard DVD player, without affecting the functioning of that device, but with the data fully recoverable in a simple and efficient way. In addition to the normal video frames there are inserted extra frames which substantially consist of encoded translated auxiliary data, and appear to the end user as noise shown on their display device.

This invention provides a solution on how auxiliary data such as an augmentation script can be retrieved directly from an AV stream, stored for example on a DVD. The invention can be used for disc-based AV content delivery (for example, DVD, Blu-ray Disc) where this content is afterwards transported via some analogue data path. This invention provides an embodiment for embedding data in video frames.

One embodiment of the invention is the embedding of user data in MPEG based AV-material and later on the regaining of this user data, without errors, from the MPEG based AV-material, in an efficient as possible way. This is achieved while accounting for the limitations and formats of standardised MPEG streams, the functional specifications, capabilities, and limitations of the system components at the decoder side (disc player device), and the capturing and reconstruction capabilities at a decoder device. Without changing anything in the MPEG standard or the disc player device the embedded user data will be recoverable from the analogue output of the disc-player device. The invention also allows the auxiliary data, when it is stored in an MPEG stream, to be directly recoverable from the encoded MPEG frames without the need to decode the frames. This is possible if the system at the receiving end has direct access to the digital MPEG stream.

Advantageously, the translating of the auxiliary data according to the defined scheme comprises converting the auxiliary data into a plurality of levels, each level corresponding to one of a predefined list of levels, wherein the predefined list of levels consists of thirty levels being the numbers 1 to 15 and -1 to -15.

The translating of the auxiliary data according to the defined scheme further comprises converting the plurality of levels into rectangular blocks with m levels per block, where m is less than 25% of the block size. In a preferred embodiment, m equals 10 or less and the block size equals 8 x 8. The translating of the auxiliary data according to the defined scheme further comprises assembling a frame from the said blocks.

The main advantage of this invention is that no separate distribution channel is required to deliver user data (in this situation amBX scripts used for augmenting a user experience) to the consumer. In addition, a (current) consumer disc-player device does not need any changes/alterations to be able to support this invention. The actual changes have to be built into the processor which is receiving the video frames, which can receive an analogue output from the legacy DVD player. The invention does not require any standardisation activity, which always is a very time consuming process.

Preferably, the encoder can insert into one or more frames substantially consisting of the encoded translated auxiliary data, a predefined video portion. Instead of presenting a sequence of complete random frames to the user, it is therefore possible to include in each frame also some information (for instance with a suitable logo), that informs the user about the content of these frames.

The processor at the receiving end can be adapted so that it does not continuously have to check for possible embedded user data. To be able to do this, some announcement sequence is required. A similar type of sequence could be chosen to inform the processor of the end of the embedded user data. The most logical announcement sequence would be a typical frame sequence that normally does not occur in content and which can be recognised easily with the already available functionality in the processor.

The encoding method can further comprise receiving a fingerprint frame, and when combining the video data and the encoded video frames into a bitstream, including said fingerprint frame immediately prior to said encoded video frames.

For example, a short sequence of frames preceding the start of an embedded user data sequence could be used, which is recognised by the fingerprinting unit of the processor. Because such a fingerprinting unit is continuously active it therefore does not result in extra system load or inclusion of new functionality. A typical short sequence that could be used in a frame may comprise alternating black and white blocks (each as large as one of the blocks used for the fingerprint calculations) succeeded by a frame with alternating white and black blocks. If necessary this can be repeated a couple of times. This leads to an alternating pattern for the fingerprints, with high probability of each of the bits. The sum of this information results in sufficient information to uniquely identify the start position of the user data sequence. An audio trigger could also be used as a way of starting the capture of the auxiliary data at the receiving end.

In an embodiment where data is encoded in levels in a DCT 8 x 8 block, it is possible that the DCT-blocks, do not start at exactly the top left corner of the frame (there could be a horizontal and/or vertical shift in the DCT-block position). Therefore, some start sequence (header) of a number of special DCT-blocks is required to find the exact location of the succeeding DCT-blocks and results in a correct alignment. The encoding method can further comprise, when encoding the translated auxiliary data as one or more video frames, including in each frame a portion indicating the start of said auxiliary data.

The invention can be used for the embedding of user data (for example, scripts, and synchronisation tables) in an MPEG based video stream. Such a stream can be stored on a disc and be played by a consumer disc player device. By doing this, a separate decoder containing the processor can retrieve the user data from the stream and can use this data to provide effects that belong to the video content, to the user.

Embodiments of the present invention will now be described, by way of example only, with reference to the accompanying drawings, in which:

Fig. 1 is a schematic diagram of a sequence of video frames illustrating the MPEG system of encoding,
Fig. 2 is a diagram of a pair of quantization matrices,
Fig. 3 is a diagram of a matrix showing a serialisation route through the matrix,
Fig. 4a is a diagram of a matrix representing an 8 x 8 block,
Fig. 4b is a diagram of the matrix of Fig. 4a after DCT transformation,
Fig. 5 is a diagram of the matrix of Fig. 4b after quantization,
Fig. 6 is a schematic diagram of a device (an encoder) for creating a bitstream,
Fig. 7 is a schematic diagram of a portion of the encoder of Fig. 6,
Fig. 8 is a schematic diagram of a communication chain,
Fig. 9 is a schematic diagram of a portion of the chain of Fig. 8, showing in more detail a DVD player and a separate decoder,
Fig. 10 is a schematic diagram of a portion of the decoder of Fig. 9, and
Fig. 11 is a view of a screenshot of a video frame.

The preferred embodiment of the present invention takes the auxiliary data and encodes that data as one or more MPEG video frames. These can then be combined with a conventional series of MPEG frames to create a signal that is identical to a conventional MPEG signal. This signal will be handled by all of the devices in the communication chain without any adaptation required, either on the encoding side or at the receiving end, where any device that receives the signal will simple handle the signal as a standard series of encoded video frames.

For a thorough understanding of the invention, some MPEG basics are explained, which simplify the discussion of the algorithm that follows below. In addition to the overhead (like MPEG headers), an MPEG signal consists of a series of frames. These frames can be categorized into two types. An intraframe coded frame (an 1-frame) is encoded independently of other frames in the stream and only exploits spatial redundancy in a picture. The second type, an interframe coded frame (a P-frame or a B-frame), exploits the temporal redundancy between consecutive frames and uses motion compensation to minimize the prediction error. Only the prediction error and some overhead, like the motion vectors, are encoded. P-frames are predicted from one frame (an 1-frame or a P-frame) in the past, and B-frames are predicted from two frames (an I-frame or a P-frame), one in the past and one in the future. Since B-frames refer to frames in the future, the transmission order is different from the display order; the B-frame follows after the frames from which it is predicted.

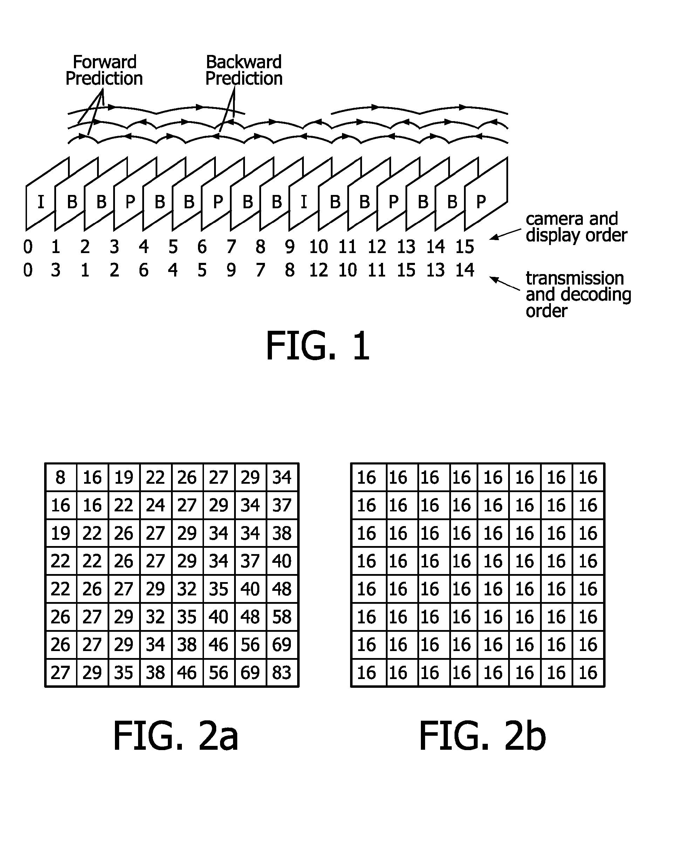

An example of a sequence containing I-, P-, and B-frames is shown in Fig. 1. This figure shows how the different frame types occur in transmission/decoding and in camera/display order, and how they refer to each other. The coding procedure (which translates the pixel data into an encoded form for storage or transmission) of the frames is as follows:

1) The frame (for an I-frame this is the image itself and for a P- or B-frame this is the prediction error) is divided into 8 x 8 blocks of pixels for each component (luminance y samples and chrominance $C_b$ and $C_r$ samples). A so-called macroblock is composed of four (2 x 2) blocks of luminance values, and, depending on the chrominance format, of eight, four or two blocks of chrominance samples for the 4:4:4, 4:2:2, and 4:2:0 chrominance format, respectively. In the case of 4:2:2 chrominance format, the chrominance values are horizontally downsampled, and in the case of 4:2:0 chrominance format the chrominance values are horizontally and vertically downsampled. Motion compensation in P- and B-frames is performed on basis of these macroblocks.

2) A two-dimensional DCT (discrete cosine transform) transformation is performed on the 8 x 8 blocks resulting in 8 x 8 blocks of DCT coefficients. The DCT coefficients contain information on the horizontal and vertical spatial frequencies of the input block. The coefficient corresponding to zero horizontal and zero vertical frequency is called the DC coefficient. Typically for natural images, the arrangement of these coefficients is not uniform; the transformation tends to concentrate the energy into the low-frequency coefficients (upper-left corner of an 8 x 8 DCT transformed block).

3) The AC DCT coefficients $c(m,n)$ (the DC coefficients are handled differently) in intra-coded blocks are quantized by applying a quantization step $q$ . $Q_{intra}(m,n)/16$ and in inter-coded blocks by applying a quantization step $q$ . $Q_{non-intra}(m,n)/16$. Fig. 2a depicts the default intra quantizer matrix $Q_{intra}$ and Fig. 2b the default non-intra quantizer matrix $Q_{non-intra}$. The quantization factor $q$ (in the MPEG standard this quantization step is given by the *quantizer_scale* variable) can be set from macroblock to macroblock and ranges between 1 and 112.

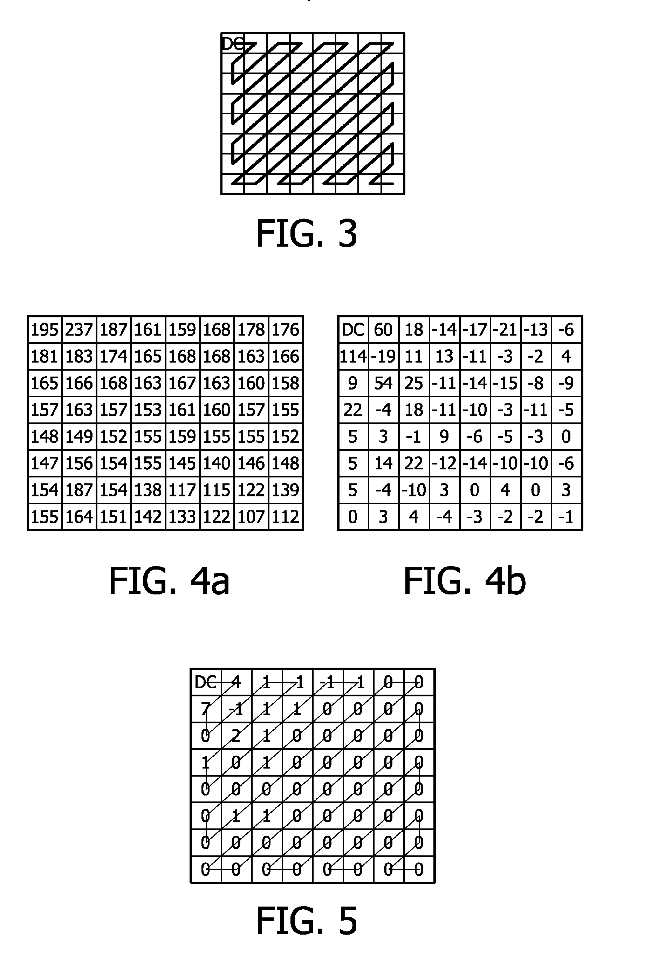

4) Serialization of the DCT coefficients. It is the purpose of this step to map the two-dimensional 8 x 8 block of DCT coefficients to a one-dimensional array of 64 coefficients. The serialization of the quantized DCT coefficients exploits the likely clustering of energy into the low-frequency coefficients, which occurred during step 2 above. Fig. 3 shows a serialization order (in this figure a zig-zag scan is shown, however there is also an alternate scan, which often gives better compression for interlaced video) of the DCT coefficients used in an MPEG scheme, in which the first and last entries represent lowest frequencies and highest spatial frequencies, respectively.

5) Coding of the DCT coefficients. The list of values produced in step 4 is entropy coded using a variable-length code (VLC). In this step the actual compression takes place. In Table 1 below there is tabulated a part of the table, which is used for intra AC coefficients. Each VLC codeword denotes a run of zeros (i.e., the number of zero valued coefficients preceding a DCT coefficient) followed by a non-zero coefficient of a particular level. VLC coding recognizes that short runs of zeros are more likely than long ones, and small coefficients are more likely than large ones. It allocates codewords of different lengths for the various VLC codes that occur.

| Table (1) | | |
|---|---|---|
| Variable length code (NOTE1) | run | level |
| 0110 NOTE2 | End of Block | |
| 10 s | 0 | 1 |
| 010 s | 1 | 1 |
| 110 s | 0 | 2 |
| 0010 1 s | 2 | 1 |
| 0111 s | 0 | 3 |
| 0011 1 s | 3 | 1 |
| 0001 10 s | 4 | 1 |
| 0011 0 s | 1 | 2 |
| 0001 11 s | 5 | 1 |
| 0000 110 s | 6 | 1 |
| 0000 100 s | 7 | 1 |
| 1110 0 s | 0 | 4 |
| 0000 111 s | 2 | 2 |
| 0000 101 s | 8 | 1 |
| 1111 000 s | 9 | 1 |
| 0000 01 | Escape | |
| 1110 1 s | 0 | 5 |
| 0001 01 s | 0 | 6 |

(continued)

| Variable length code (NOTE1) | run | level |
|---|---|---|
| 1111 001 s | 1 | 3 |
| 0010 0110 s | 3 | 2 |
| 1111 010 s | 10 | 1 |
| 0010 0001 s | 11 | 1 |
| 0010 0101 s | 12 | 1 |
| 0010 0100 s | 13 | 1 |
| 0001 00 s | 0 | 7 |
| 00100111 s | 1 | 4 |
| 1111 1100 s | 2 | 3 |
| 1111 1101 s | 4 | 2 |
| 0000 0010 0 s | 5 | 2 |
| 0000 0010 1 s | 14 | 1 |
| 0000 0011 1 s | 15 | 1 |
| 0000 011 01 s | 16 | 1 |

NOTE 1 - The last bit 's' denotes the sign of the level, '0' for positive '1' for negative.

NOTE 2 - "End of Block" shall not occur as the only code of a block.

To illustrate the variable length coding process in more detail, an actual example is shown in the matrices of Figs. 4 and 5, which show an example to illustrate the variable-length coding of a block. Fig. 4a shows luminance values of pixels of an 8 x 8 block in the spatial domain, and Fig. 4b shows the matrix of Fig. 4a following DCT transformation. Fig. 5 shows the levels obtained after quantization of the DCT coefficients of the block depicted in Fig. 4b.

In the first step, the 8 x 8 block containing the luminance values of the pixels in the spatial domain (Fig. 4a) is transformed to the DCT domain (Fig. 4b). Subsequently, by assuming that this block should be intra-coded, and that the quantization step q=16, these DCT coefficients are quantized by dividing each coefficient by the corresponding quantization step $Q_{non-intra}(m,n)$, (as discussed in step (3) above). This operation results in the matrix depicted in Fig. 5. The zigzag scan of step (4) above yields the following sequence of levels:

4,7,0,-1,1,-1,1,2,1,0,0,1,1,-1,-1,0,0,1,0,0,0,1,0,0,0,0,0,0,0,0,0,0,1,0,0,0...

For simplification, the encoding of the DC coefficient is skipped, since it is treated in a different way and is not used by the algorithm that is to embed the auxiliary data. Following the VLC coding approach, this sequence of levels is mapped to the following run/level pairs:

(0,4),(0,7),(1,-1),(0,1),(0,-1),(0,1),(0,2),(0,1),(2,1),
(0,1),(0,-1),(0,-1),(2,1),(3,1),(10,1),EOB

In this notation, the first number of a pair indicates the number of zeros preceding the value of the second number. The final run of zeros is replaced with an end of block (EOB) marker. Finally, these run/level pairs are converted to a bit stream by using the VLCs in Table 1:

111000/0001000/0101/100/101/100/1100/100/
001010/100/101/101/001010/001110/11110100/0110

It is possible to embed the auxiliary data in two ways, firstly in the spatial domain, followed by an MPEG encoding or directly in the MPEG domain. The preferred embodiment is to embed the data directly in the MPEG domain, since this gives the highest control over the MPEG stream and the bit rate.

Since what is to be embedded is random data (in the sense that it does not correspond to an actual image), consecutive video frames are uncorrelated, that is there is no temporal redundancy between frames. As a direct consequence, in general, frames cannot be predicted from past frames or future frames, and therefore it is possible only to use I-frames and/or intra coded blocks. Moreover, since the generated video frames are not natural images, it is preferable to use a modified quantization matrix instead of the default quantization matrix for intra-coded blocks. In fact it is preferred to use the quantization matrix used for inter coded blocks as depicted in Fig. 2b for the intra-coded blocks for this data stream. This can be realized by inserting this modified quantization matrix in the MPEG stream in the "sequence header" or in the "quant matrix extension" of the MPEG stream (MPEG supports the transmission of any chosen quantization matrix). The MPEG decoder will use this modified quantization matrix instead of the default one. However, another quantization matrix is also possible.

The principle embodiment of the invention is to embed the data in the levels of the DCT blocks. This means that if there are, for example 16 different levels used to embed data, then it is possible to embed $\log_2 16 = 4$ bits per DCT position. In order to embed the data in the most efficient way, the data bits (meaning the DCT levels) have to be represented by the smallest amount of MPEG stream bits per DCT position. The shortest VLCs in Table 1 are the VLCs for run-level pairs with small runs and small levels. In particular, run-level pairs with a run equal to 0 have in average the shortest VLCs for a rather large range of levels.

In Table 2, there is tabulated the VLCs for run-level pairs with corresponding VLCs with length smaller or equal to 9. It turns out, that the highest bit rate per DCT position is obtained, when only the run-level pairs with run equal to 0 are used to embed the auxiliary data. As will be seen below, because of robustness of the system, it is desirable to be able to insert zero DCT coefficients in a DCT block. Therefore zero levels are not used to embed data. In this way, it is possible to easily insert zeroes by using run-level pairs with non-zero runs without influencing the data. As can be seen in Table 2, there are 30 different levels (-15 to -1 and 1 to 15) with a run equal to 0 that can efficiently be used to embed the data. As a result, it is possible to embed $\log_2 (2 \times 15) \approx 4.9$ bits per DCT position. However, if it is necessary to insert zeros, this bit rate will decrease.

Table 2

| Variable length code (NOTE1) | run | level | length |
| --- | --- | --- | --- |
| 10 s | 0 | 1 | 3 |
| 110 s | 0 | 2 | 4 |
| 0111 s | 0 | 3 | 5 |
| 1110 0 s | 0 | 4 | 6 |
| 1110 1 s | 0 | 5 | 6 |
| 0001 01 s | 0 | 6 | 7 |
| 0001 00 s | 0 | 7 | 7 |
| 1111 011 s | 0 | 8 | 8 |
| 1111 100 s | 0 | 9 | 8 |
| 0010 0011 s | 0 | 10 | 9 |
| 0010 0010 s | 0 | 11 | 9 |
| 1111 1010 s | 0 | 12 | 9 |
| 1111 1011 s | 0 | 13 | 9 |
| 1111 1110 s | 0 | 14 | 9 |
| 1111 1111 s | 0 | 15 | 9 |
| 010 s | 1 | 1 | 4 |
| 0011 0 s | 1 | 2 | 6 |
| 1111 001 s | 1 | 3 | 8 |
| 0010 0111 s | 1 | 4 | 9 |
| 0010 0000 s | 1 | 5 | 9 |
| 0010 1 s | 2 | 1 | 6 |
| 0000 111 s | 2 | 2 | 8 |
| 1111 1100 s | 2 | 3 | 9 |
| 0011 1 s | 3 | 1 | 6 |
| 0010 0110 s | 3 | 2 | 9 |
| 0001 10 s | 4 | 1 | 7 |
| 1111 1101 s | 4 | 2 | 9 |
| 0001 11 s | 5 | 1 | 7 |
| 0000 110 s | 6 | 1 | 8 |
| 0000 100 s | 7 | 1 | 8 |
| 0000 101 s | 8 | 1 | 8 |
| 1111 000 s | 9 | 1 | 8 |
| 1111 010 s | 10 | 1 | 8 |
| 0010 0001 s | 11 | 1 | 9 |

(continued)

| Variable length code (NOTE1) | run | level | length |
|---|---|---|---|
| 0010 0101 s | 12 | 1 | 9 |
| 0010 0100 s | 13 | 1 | 9 |
| NOTE 1 - The last bit 's' denotes the sign of the level, '0' for positive '1' for negative. | | | |

In principle, the method can be used to embed in this way 63 x 4.9 = 309 bits per DCT block (the DC position is not used to embed data, but is used to prevent clipping in the spatial domain after decoding as will be explained below), provided that
the overall bit rate of the constructed MPEG stream is lower than the maximum allowed bit rate (for MPEG-2 main profile at main level, which is used for DVD content, this maximum bit rate is equal to 10 Mbits/second); and
the constructed DCT blocks containing the data, do not result in clipping in the spatial domain after decoding.

Since the data is random, it can be assumed that all run-level pairs (i.e. the run-level pairs with a run equal to 0 and levels ranging from -15 to +15) have all the same probability to be used to represent the data, i.e. a uniform distribution is assumed. As a consequence, the average VLC length per DCT position is equal to the sum of the VLC lengths divided by the number of VLCs in the codebook. In this case the average length is equal to 7.2 bits. Note that there is therefore 7.2 - 4.9 = 2.3 bits overhead. In PAL video content, one frame consists of 720 x 576 / 64 = 6480 luminance (8 x 8 pixel) DCT blocks, 6480 / 4 = 1620 chrominance DCT blocks, and there are 25 frames per second. Therefore, in total there is (6480 + 1620) x 63 x 7.2 x 25 = 91854000 bits per second needed to represent the data if all DCT positions are used, which is about a factor 9 too high. A straightforward solution to this problem is to use only 63 / 9 = 7 positions per DCT block, which has some other advantages, which will be discussed shortly. If 6 (7 turns out to be too large) positions per DCT block are used, it is possible to embed about (6480 + 1620) x 6 x 25 x 4.9 = 5953500 bits/second or 0.71Mbytes/second in PAL content. The corresponding MPEG stream exclusive the overhead has a bit rate of about (6480 + 1620) x 6 x 25 x 7.2 = 8748000 bits/second or 8.3 Mbits/second. This leaves about 1.7 Mbits/second for the MPEG overhead.

Another issue to be resolved in this embedding process is clipping in the spatial domain. An MPEG decoder computes the pixel values by means of the inverse DCT transformation, which is defined as:

$$p(n,m) = \frac{1}{4} \sum_{u=0}^{7} \sum_{v=0}^{7} C(u)C(v)F(u,v) \cos\left(\frac{\pi}{8}\left(n+\tfrac{1}{2}\right)u\right) \cos\left(\frac{\pi}{8}\left(m+\tfrac{1}{2}\right)v\right),$$

where

$$C(u) = \begin{cases} \frac{1}{\sqrt{2}} & \text{if } u = 0, \\ 1 & \text{if } u \neq 0, \end{cases}$$

F(u,v) are the 64 DCT coefficients, and p(n,m), where n = 0 to 7 and m = 0 to 7, are the pixel values in a macroblock. These pixel values are clipped such that $0 \leq p(n,m) \leq 255$. Therefore it is necessary to make sure that the DCT coefficients F(u,v) are chosen such that, when the decoding takes place, clipping does not occur, since clipping (a non-linear operation) makes decoding of the data more complex. The auxiliary data has to survive the analogue path, so therefore the pixel values p(n,m) have to meet the more stringent condition $32 \leq p(n,m) \leq 235$ as described in the recommendation ITU-R BT.601-4. An upper bound for a pixel value p(n,m) is equal to

$$p(n, m) \leq \frac{1}{4} \sum_{u=0}^{7} \sum_{v=0}^{7} C(u)C(v)|F(u, v)|$$

$$= \frac{1}{8}|F(0, 0)| + \frac{1}{8}\sqrt{2}\left(\sum_{u_0=1}^{7} |F(u_0, 0)| + \sum_{v_0=1}^{7} |F(0, v_0)|\right) + \frac{1}{4}\sum_{u_1}^{7} \sum_{v_1}^{7} |F(u_1, v_1)|$$

$$\leq \frac{1}{8}|F(0, 0)| + \frac{1}{4}\sum_{u=0}^{7} \sum_{v=0}^{7} |F(u, v)| - \frac{1}{4}|F(0, 0)|,$$

where F(0,0) is directly related to the mean pixel value in an 8 x 8 block of pixels (the DC value). One possible selection is F(0,0) = 1072 so that the mean pixel value of an 8 x 8 block is equal to (235 + 32) / 2 = 134 = 1072 / 8. If 6 AC DCT coefficients are used to embed the auxiliary data, this choice assures that when the mean of the absolute values of these 6 coefficients is smaller than 101 x 4 / 6 = 67 then clipping does not occur in the average (note that 101 = 235 - 134 ≈ 134 - 32).

Since the embedded data should survive the analogue path from the DVD player to an external decoder, the data should be robust to noise. One way to achieve this is to use larger quantization steps of the DCT coefficients. These quantization steps can be controlled by the quantization matrix and the *quantizer_scale* q variable. An intra coded DCT coefficient c(m,n) is decoded as:

$$c(m,n) = \text{level x q } Q_{\text{intra}}(m,n) / 16$$

which reduces to

$$c(m,n) = \text{level x q}$$

if $Q_{\text{intra}}(m,n)$ =16 for all m and n. Thus the larger the quantizer scale q, the more robust the data is to noise. For random data, a level has the absolute value of 8 [2 x (1 + 2 + ... + 15) / 30 = 8] on average. As shown above, to prevent clipping, the average DCT coefficient should be smaller or equal to 67. As a direct consequence, on average, q should be chosen smaller or equal to 67 / 8 = 8. Here the second advantage of only using 6 DCT coefficients in a DCT block is shown; more coefficients leads to a lower q which results in a system that is less robust to noise. As an alternative or to make the system even more robust, one could apply error correction.

It can happen that for some DCT blocks the average of the absolute values of the DCT coefficients is larger than 67. In this case, one could check whether clipping occurs by applying the inverse DCT transformation, and if so, to reduce the number of DCT coefficients in this particular block. By using the run-level pairs wisely, some bits can be saved by creating zeros at wisely chosen places. The decoder will notice this. Finally, to make the system more secure, one could use encryption by encrypting the data.

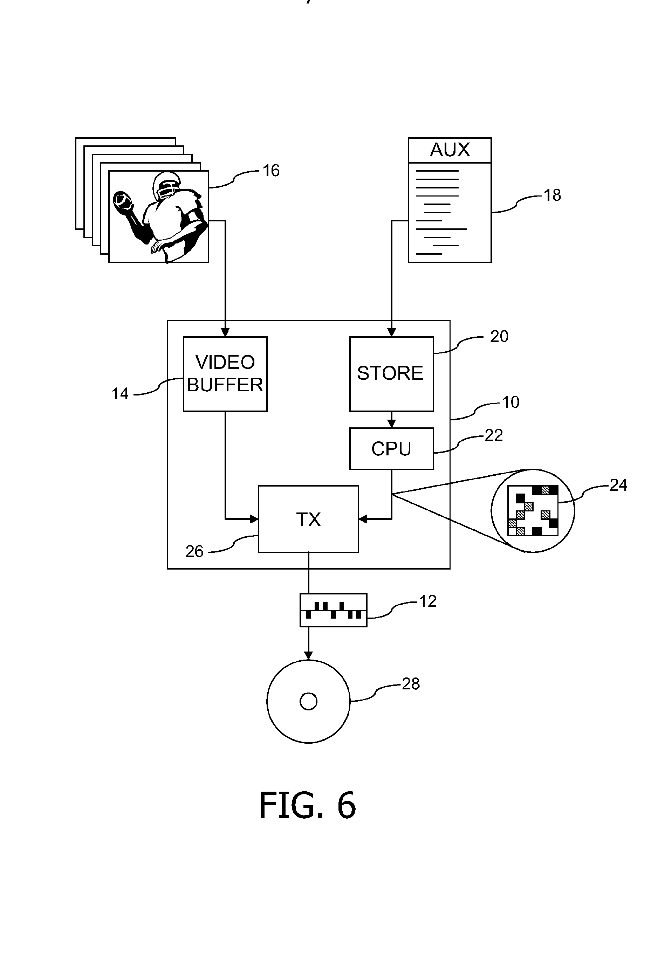

Fig. 6 shows the encoder 10, which is a device for creating a bitstream 12. The encoder 10 comprises a video buffer 14 which is arranged to receive conventional video data 16 being frames making up some video sequence. The video data 16 may be in the form of pixel data that still needs to be encoded into an MPEG stream, or may already be MPEG data that is to be combined with the auxiliary data 18 once that is encoded.

The device 10 also comprises a storage device 20 that is arranged to receive and store the auxiliary data 18. In one embodiment of the invention, the auxiliary data 18 takes the form of one or more XML files which define scripts for use in the augmentation of an entertainment experience (such as a film) and takes the form of one or more files with synchronisation tables. The data 18 is to be encoded by the device 10 into MPEG I-frames or P- or B-frames with intra coded blocks only.

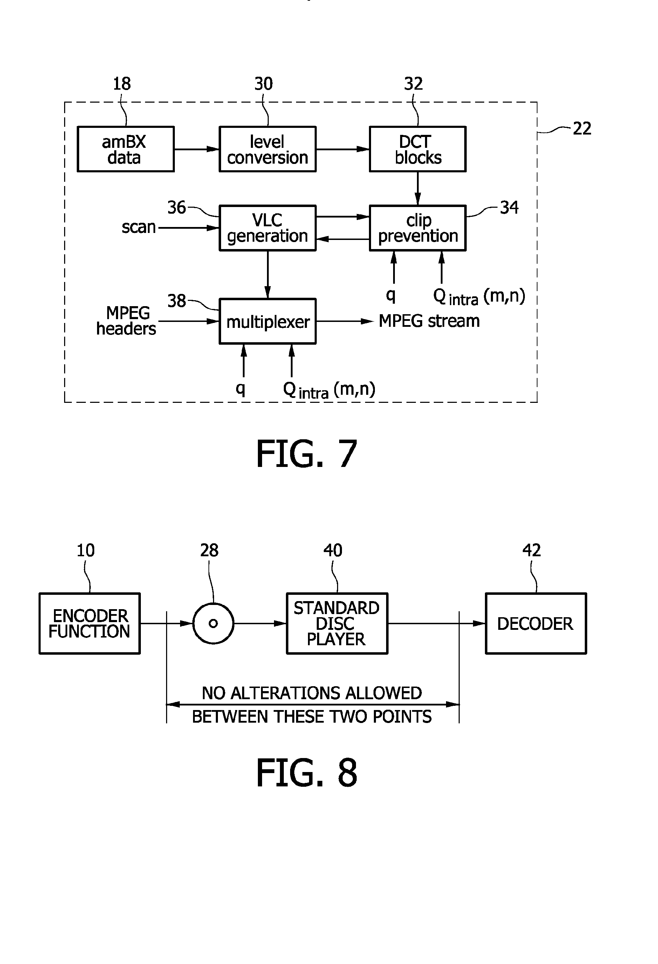

A processor 22 in the encoder 10 is arranged to translate the auxiliary data 18 according to a defined scheme (discussed in more detail below with reference to Fig. 7) and to encode the translated auxiliary data as one or more video frames 24, each frame 24 substantially consisting of the encoded translated auxiliary data 18. The processor 22 turns the auxiliary data 18 from its stored form (a bitstream representing an XML file) into a set of MPEG levels as frames 24. These frames 24, when handled by, for example, a conventional MPEG decoder will look exactly like a valid MPEG stream, although if that I-frame is displayed by a suitable display device, it would simply be noise.

The frames 24 and the video data 16 are passed to a transmitter 26, which is arranged to combine the video data 16 and the encoded video frames 24 into the bitstream 12. The encoder 10 can output the bitstream 12 to a record carrier 28 (such as a conventional DVD), which stores the bitstream 12. The bitstream 12 comprises a plurality of video frames encoded according to a predefined standard, a first set of the video frames, when decoded according to the predefined standard, comprise video data (the original data 16), and a second set of the video frames, when decoded according to the predefined standard, substantially consisting of encoded translated auxiliary data (the data 18).

Fig. 7 shows in more detail the workings of the processor 22 in the encoder 10, which receives the auxiliary data 18. The processor 22 is arranged, when translating the auxiliary data 18 according to the defined scheme, to convert the auxiliary data 18 into a plurality of levels, each level corresponding to one of a predefined list of levels, being the numbers 1 to 15 and -1 to -15. This takes place at functional block 30, where the bitstream is converted into a series of levels. The next block 32 is the conversion of the plurality of levels into 8 x 8 blocks with 6 levels per block.

The processor 22 then, at block 34, carries out clip prevention, prior to the conversion of the DCT blocks to the VLC codewords, which takes place at block 36. The processor 22 is then arranged to assemble a series of frames with standard MPEG headers, at the multiplexer 38, which results in an output that is an MPEG stream, that can be passed to the transmitter 26 in the encoder 10, for combination with the video data 16, for ultimate creation of the bitstream 12.

During the translation and encoding of the auxiliary data 18 by the processor 18, the data 18 is mapped on to the 30 levels, which are consecutively put in the DCT blocks. These levels are converted to DCT coefficients by using the quantization matrix $Q_{intra}(m,n)$ and quantization scale q. If clipping occurs after applying the inverse DCT transformation, levels are deleted and zeroes are inserted in a smart way, by communicating with the VLC generation module 36, to keep the bit rate as low as possible. The deleted levels are moved to the next block. For this procedure, the VLC generation module 36 needs to know which scan method (alternate or zigzag scan) is used to generate the correct VLCs. And finally, the generated stream is multiplexed with MPEG headers to construct a valid MPEG stream.

Fig. 8 shows an example of a communication chain in which the encoder 10 has its output (the bitstream 12) stored on the DVD 28, which can then be received by a standard DVD player 40. The analogue output of that DVD player 40 can be used by a decoder 42, which will be able to access the auxiliary data 18, which is contained in the video frames.

The decoder 42 retrieves the analogue video frames, and applies the DCT transformation to each 8 x 8 block to obtain the DCT coefficients of each block. Since the decoder knows the values of the quantizer matrix $Q_{intra}(m,n)$ and the value of the quantizer scale q, it can compute the corresponding levels by division. From these levels the bits can be retrieved by means of a look up table. The decoder 42 also knows in which order the DCT coefficients are written in the DCT blocks. Zero DCT levels do not present data and can be skipped. Thus if a zero is created because of clip prevention, the decoder 42 will notice this.

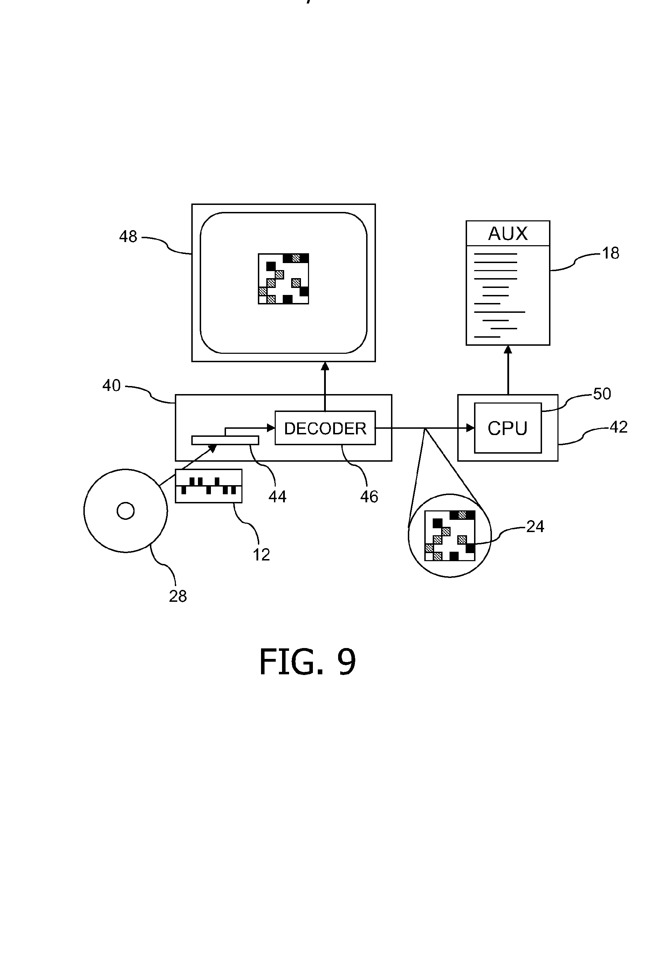

Fig. 9 shows the system for handling the bitstream 12 at the receiving end, such as a consumer's lounge where they will watch the film on the DVD 28, and have an augmentation system present that will be able to use the auxiliary data 18. The system, in one embodiment, comprises the DVD player 40 and the decoder 42.

The player 40 comprises a receiver 44, which is arranged to receive the bitstream 12 from the carrier 28, the bitstream 12 comprising a plurality of encoded video frames. In addition, the DVD player includes a conventional video decoder 46 which is arranged to decode the video frames which are passed to a display device 48, which is arranged to display the video frames 24 and 16.

The video frames are also passed by the DVD player 40 to the decoder 42. This connection can be a standard analogue output, as a DVD player receives a digital stream (MPEG) and converts this into an analogue stream for display by an analogue device such as the conventional television 48. The decoder 42 includes a processor 50 which is arranged to execute an extraction process on the decoded video frames 24, each frame 24 substantially consisting of encoded translated auxiliary data 18, the extraction process comprising decoding the auxiliary data 18 from the video frames 24.

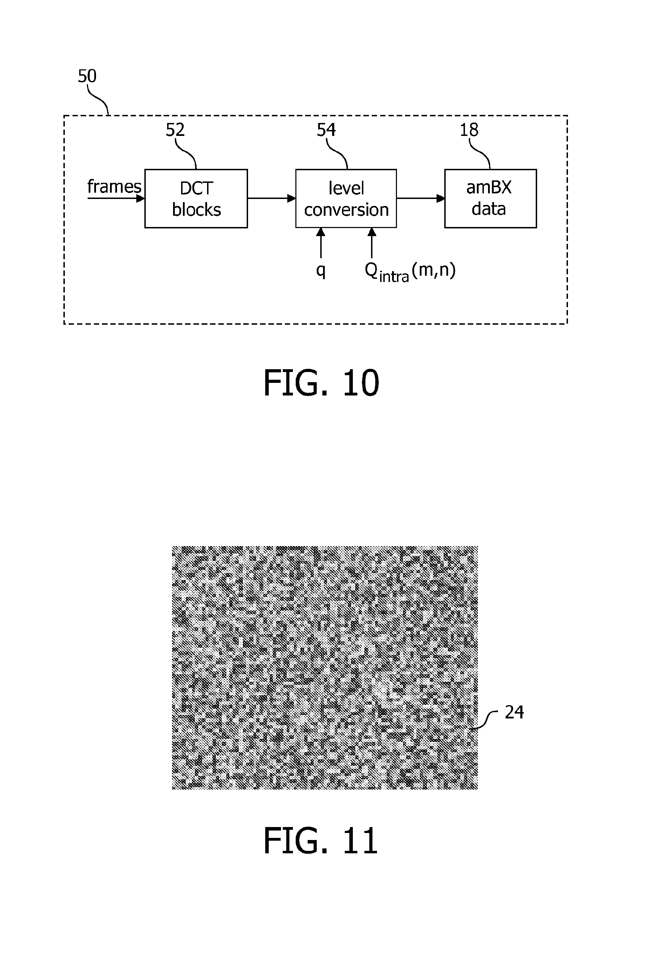

The decoder 42 has an internal processor 50 shown in more detail in Fig. 10. The processor 50 contains a functional module 52, which transforms the pixels of the frames to the DCT domain by applying the 8 x 8 DCT transformation. By using the quantization matrix $Q_{intra}(m,n)$ and quantization scale q the coefficients are translated to levels at the functional block 54, from which the original auxiliary data can be recovered.

Each video frame 24 contains the encoded auxiliary data 18, and when that video frame 24 is shown by the conventional display device 48, it appears as a series of grey scale pixels that do not form any meaningful image. These frames, which consist of noise, can be included on a DVD 28, and will run for a few seconds prior to the start of the film. The user can be warned of the existence of the frames via an insert in the DVD literature, or a logo or similar message could be applied to a very small portion of the screen to warn the user. This logo would be incorporated when the frame is originally encoded at the encoder end, and would form a portion of the specific frames that contain the auxiliary data, as actual video data. It is also possible to add information to the DVD which disables the possibility of the user skipping the auxiliary frames or performing trick play during the playing of these frames.

As described above in the principal embodiment, the auxiliary data 18 (formed of bits) has to be converted to MPEG levels. In total there are thirty levels (-1 to -15 and 1 to 15) to represent the data bits. Since thirty is not a power of two, the conversion of the bits to levels is not straightforward. One solution is to map only 4 bits, corresponding to 16 numbers 0 to 15, to these 30 levels, but then only a fraction $16 / 30 \approx 0.53$ of the available levels are used, i.e. only 4 bits are embedded instead of the theoretical possible 4.9 bits. As a result, the number of bits per DCT block will decrease, lowering the data rate and increasing the number of frames needed to encode the data 18.

Thus the number of bits b that can be represented by N DCT positions (i.e. represented by 30N levels) should be determined, such that the number of bits b that can be embedded per DCT position is maximum:

$$b = \arg\max_{i \in \mathbb{N}} \frac{\iota}{\lceil \log_{30}(2^i - 1) \rceil} = \arg\max_{i \in \mathbb{N}} \frac{\iota}{N},$$

where $\lceil q \rceil$ denotes rounding q to the nearest integer towards $\infty$, and N = $\lceil \log_{30}(2^i - 1) \rceil$ the number of DCT positions needed to represent a number x that can be described in i bits in a base 30 number system, i.e.:

$$x = \sum_{\ell=0}^{b-1} c_\ell 2^\ell = \sum_{k=0}^{N-1} a_k 30^k,$$

where $c_l$ are the bits, and $a_k \varepsilon \{0, \dots, 29\}$ are the base 30 coefficients. However the number of bits b cannot be taken too large, since the word length used by a computer that can efficiently manipulated is limited. Current computers/microprocessors use word lengths of 8, 16, 32 and 64 bits. In the following table the number of bits efficiently represented by a number in a base 30 number system for different word lengths.

| word length | bits used | DCT positions | bits per DCT position | fraction DCT levels used |
|---|---|---|---|---|
|  |  |  |  |  |
| 8 | 4 | 1 | 4 | 0.53 |
| 16 | 14 | 3 | 4.67 | 0.61 |
| 32 | 29 | 6 | 4.83 | 0.74 |
| 64 | 49 | 10 | 4.90 | 0.95 |

In this table, it is tabulated for each word length the optimum number of bits to be used, which follows from Equation (1) above, the corresponding number of DCT positions needed to represent the bits, the number of bits per DCT position, and the fraction of the 30 levels used to represent the bits. In this table, it can be seen that the larger the word length the higher the fraction of the DCT levels used. In other words, the larger the word length the more efficient the representation is.

From the table above, the auxiliary data 18, as a bit stream, is converted to MPEG levels when a microprocessor uses a word length of, for example, 32 bits, in the following manner:

1. Divide the auxiliary data bits into sections of 29 bits;
2. Convert this number of 29 bits to a number represented in a 30 number system; and
3. Map the base 30 coefficients to MPEG levels.

The last step is necessary, since the coefficients of the number in a 30 number system take the values 0 to 29 while the MPEG levels take the values -15 to -1 and 1 to 15. In the preferred embodiment, the mapping as shown in the table below is used, but other mappings are possible (for example to encrypt the data). One simple scheme for mapping from base 30 coefficients to MPEG level is

| base 30 coefficient | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 |
|---|---|---|---|---|---|---|---|---|---|---|---|---|---|---|---|---|---|---|---|---|---|---|---|---|---|---|---|---|---|---|
| MPEG level | -15 | -14 | -13 | -12 | -11 | -10 | -9 | -8 | -7 | -6 | -5 | -4 | -3 | -2 | -1 | 1 | 2 | 3 | 4 | 5 | 6 | 7 | 8 | 9 | 10 | 11 | 12 | 13 | 14 | 15 |

where the top line numbering 0 to 29 represents numbers to the base 30 and the bottom line represents the MPEG levels. For example, number 22 in the base 30 sequence would be mapped to DCT coefficient 8 as an MPEG level to be inserted into the 8 x 8 block. As an example of the entire translation and coding process, for a 32 bits word length case, the following 29 bit number x is converted to 6 MPEG levels.

$$x = 1010000111010111001100101011 = 339404371$$

This binary number (339404371 in decimal) is the auxiliary data 18, which can be considered to be one or more instructions represented in binary for use in an augmentation system. The following algorithm is used to compute the base 30 coefficients $a_k$ in $x = \sum_{k=0}^{5} a_k 30^k$, for k = 0 to 5, $a_k$ = rem(x,30), x = ⌊x/30⌋, end. Or in words:

    1. $a_k$ becomes the remainder of x divided by 30;
    2. the new x is computed by dividing x by 30 and rounding the result to the nearest integer;
    3. repeat these two steps until all 6 coefficients $a_k$ are computed.

If this algorithm is applied to the number x above (339404371) then the following 6 steps are executed:

    1. x = 339404371, $a_0$ = 1, new x becomes 11313479;
    2. x = 11313479, $a_1$ = 29, new x becomes 377115;
    3. x = 377115, $a_2$ = 15, new x becomes 12570;
    4. x = 12570, $a_3$ = 0, new x becomes 419;
    5. x = 419, $a_4$ = 29, new x becomes 13;
    6. x = 13, $a_5$ = 13, new x becomes 0.

So x can be written as:

x = 339404371
$= 1 \cdot 30^0 + 29 \cdot 30^1 + 15 \cdot 30^2 + 0 \cdot 30^3 + 29 \cdot 30^4 + 13 \cdot 30^5$.

From the table above, the coefficients translate into the following MPEG levels -14, 15, 1, -15, 15, and -2. These are then inserted into an 8 x 8 block, with -14 going into position 1 in the block and 15 going into position 2 in the block and so on. When this is received at the receiving end, the decoder uses the inverse mapping to find the base 30 coefficients, from which the original bits can be easily extracted, to recreate the auxiliary data.

In the above embodiment, the decoder 42 is receiving an analogue image of a frame. However, if the MPEG stream itself is available to the decoder 42, the auxiliary data extraction is much simpler. This can occur in, for example, a bespoke device at the receiving end, which in addition to decoding the video frames for display also has access to the digital data making up the frames. The auxiliary data is embedded in the DCT levels, which are directly available to an MPEG decoder.

Moreover, the quantization step q and the quantization matrix $Q_{intra}$ are not needed to extract the auxiliary data, since these are only needed to compute the levels from the DCT coefficients. In this case, the decoder, if the MPEG stream is available, uses an MPEG parser to extract the levels from the MPEG stream. The mapping maps these levels to the auxiliary data by using, for example, the inverse of the table above which maps the base coefficients 0 to 29 to the various MPEG levels.

Other additional embodiments of the encoder/decoder scheme are possible, for example, information could be stored in the location of the DCT coefficient. A DCT block contains 63 AC coefficients and 1 DC coefficient. To embed data, the position of one non-zero AC level in the DCT block could be used. There are 63 positions to place a non-zero AC level, and therefore it is possible to embed $\log_2 63 \approx 6$ bits per DCT block. In addition, it is still possible to also embed data in the levels. If levels -15 to -1 and 1 to 15 are used, it is possible to embed $\log_2 (63 \cdot 30) \approx 10.9$ bits per DCT block. To increase the number of bits that can be embedded in a DCT block even more, the allowed levels -15 to -1 and 1 to 15 can be divided into pairs, for example (-15,-14), (-13,-12) ... (-1,1) ... (14,15) and use 15 AC levels instead of 1. The first AC level has 63 positions to choose from and two levels, the second 62 positions and two levels, and so on. In this way it is possible to embed

$$\sum_{i=0}^{14} \log_2(2(63 - i)) = 15 + \sum_{i=0}^{14} \log_2(63 - i) \approx 102 \text{ bits}$$

per DCT block. The decoder needs to know in which order the pairs are embedded in the DCT block to know from how many locations in the DCT block the pair could choose from to extract the correct bits. Note that the set of levels in divided into disjunctive sets; this is needed to distinguish the different AC levels at the decoder side. The levels could also be divided into larger sets, for example in two sets. In this case, two AC levels are used to embed the data. The first AC level can choose from 63 positions and 15 levels, while the second AC level can choose from 62 positions and 15 levels, and therefore it is possible to embed log$_2$ (63 · 15) + log$_2$ (62 · 15) ≈ 19.7 bits per DCT block.

In practice, to be robust because of distortions due to the DVD player and analogue path, it is not advisable to use 63 positions and/or 15 levels but less. Using less positions and/or levels results in a lower bit rate per DCT.

To be even more robust, with respect to the distortions introduced by the DVD player and the analogue path, an alternative is to embed the information in DC levels, meaning the average luminance or chrominance value of an 8 x 8 block. The average value of a block can have a value between 0 and 255, or the more stringent condition between 32 and 235 as described in the recommendation ITU-R BT.601-4.

Thus per block it is possible to embed a maximum of log$_2$ (235 - 32) ≈ 7.6 bits. In practice, to be more robust it is necessary to lower the number of possible mean values. Instead of using all 235 - 32 = 203 levels, a quantization is applied and only a subset of these 203 levels is used. For example, a quantization step of 8 could be used, meaning that only the 26 levels 32, 40, 48 ... 224 and 232 are used to embed data, which results in 4.7 bits per block. If the mean value of a block changes due to distortion, the decoder assumes that the mean value in the subset closest to this distorted mean value was embedded.

In practice, the DVD player may increase or decrease the brightness of the whole image that is received as a frame, and as a result the mean value of an 8 x 8 block is also increased or decreased. If the brightness is significantly changed, for example with 32, the decoder is not able to extract the bits correctly. To tackle this problem, the data can be embedded in the difference in mean values of two adjacent 8 x 8 blocks. Any change in the whole block will not affect the difference between two blocks. For example, if it is assumed that only the 32 mean value levels 32, 38 ... 218, (a quantization step of 6) is used, it is possible to embed 5 bits.

If the encoder wishes to embed the following data: 1, 15, 15, 14, 3, 0, 0, 31, then the following methodology is used. The decoder starts with an arbitrarily chosen mean value of 128 (note that another mean value of the allowed mean values can be chosen to start with, but the decoder needs to know this start value).

To embed the data 1, the encoder embeds 128 + (1 x 6) = 134, i.e. the mean value of the first 8 x 8 block in the left upper corner of the image becomes 134.

Then 15 is embedded by adding 15 x 6 = 90 to the previous mean value 134, i.e. the second block gets the mean value of 134 + 90 = 224. However, 224 is too large (218 is the largest allowed mean value) and therefore this value is wrapped around by means of the modulo operator, i.e. it gets the value [224 - 32]$_{32 \times 6}$ + 32 = [192]$_{192}$ + 32 = 32, where [p]$_q$ means the integer p modulo q. The value 32 is subtracted to make sure that the minimum allowed mean value 32 is mapped to zero, because of the modulo operator. Then after applying the modulo operator this value 32 is added again.

Then the next value 15 is embedded by adding 15 x 6 = 90 to the previous value of 32, thus the next block gets the value 122.

14 is embedded by adding 84 to the value 122, thus the mean value of the next block becomes 206.

The next block gets the mean value 206+3 x 6 = 224. This value is also wrapped around: [224 - 32]$_{192}$ + 32 = 32.

The following two blocks get the mean value 32, since two zeros are embedded.

Finally, the last block gets the mean value 32 + 31 x 6 = 218.

Thus the 8 adjacent blocks in the left upper corner of the image get the mean values 134, 32, 122, 206, 32, 32, 32, 218. The decoder computes the mean values of the blocks by scanning the image from left to right and construct a one dimensional vector m containing these values. It extracts the data d(i) with i = 0 to 7 in the following way:

$$d(i) = \frac{[m(i) - m(i-1)]_{192}}{6},$$

where m(-1)=128 because this value was chosen as the start value in the encoder. Applying this rule yields the following data

$$[134\text{-}128]_{192}/6 = 1;$$

$$[32\text{-}134]_{192}/6 = [\text{-}102]_{192}/6 = [90]_{192}/6 = 15;$$

$$[122\text{-}32]_{192}/6 = 15;$$

$$[206\text{-}122]_{192}/6 = 14;$$

$$[32\text{-}206]_{192}/6 = [\text{-}174]_{192}/6 = [18]_{192}/6 = 3;$$

$$[32\text{-}32]_{192}/6 = 0;$$

$$[32\text{-}32]_{192}/6 = 0;$$

$$[218\text{-}32]_{192}/6 = 31$$

The advantage of this approach is that the data embedded is not corrupted by a brightness change of the whole image, since the offset is cancelled due to the subtraction.

An advantage of the DC embedding approach is that the decoder can be very simple, since it does not need to compute the DCT transforms, but only the mean values of 8 x 8 blocks. In Fig. 11 an example of an image, in which the data is embedded in the mean values of an 8 x 8 block is shown, which plots an example how an image embedded with auxiliary data looks, if the data is embedded in the DC values.

## Claims

1.  A method of creating a bitstream (12) comprising receiving video data (16), receiving auxiliary data (18), translating said auxiliary data (18) according to a defined scheme, the defined scheme comprising converting the auxiliary data (18) into a plurality of levels, each level corresponding to one of a predefined list of levels and converting the plurality of levels into a predetermined number of DCT positions comprised in a DCT block, encoding the translated auxiliary data (18) as one or more video frames (24), by inserting said converted plurality of levels into the DCT levels of the block, each frame (24) consisting of the encoded translated auxiliary data (18) or the encoded translated auxiliary data (18) and a logo or similar message applied to a very small portion of the frame (24), and combining the video data (16) and the encoded video frames (24) into a bitstream (12).

2.  A method according to claim 1, and further comprising receiving a fingerprint frame, and when combining the video data (16) and the encoded video frames (24) into a bitstream (12), including said fingerprint frame immediately prior to said encoded video frames (24).

3.  A method according to any preceding claim, and further comprising, when encoding the translated auxiliary data (18) as one or more video frames (24), including in each frame (24) a portion indicating the start of said auxiliary data (18).

4.  A method according to any preceding claim, and further comprising, when encoding the translated auxiliary data including information for disabling a user, skipping the one or more video frames (24) comprising said auxiliary data (18).

5.  A device for creating a bitstream (12) comprising a video buffer (14) arranged to receive video data (16), a storage device (20) arranged to receive auxiliary data (18), a processor (22) arranged to translate said auxiliary data (18) according to a defined scheme, the defined scheme comprising converting the auxiliary data (18) into a plurality of levels, each level corresponding to one of a predefined list of levels and converting the plurality of levels into a predetermined number of DCT positions comprised in a DCT block and to encode the translated auxiliary data (18) as one or more video frames (24), by inserting said converted plurality of levels into the DCT levels of the block, each frame (24) consisting of the encoded translated auxiliary data (18) or the encoded translated auxiliary data (18) and a logo or similar message applied to a very small portion of the frame (24), and a transmitter (26) arranged to combine the video data (16) and the encoded video frames (24) into a bitstream (12).

6.  A method of handling a bitstream (12) comprising receiving a bitstream (12), said bitstream (12) comprising a plurality of encoded video frames (24), executing an extraction process on the video frames (24), each frame (24) consisting of encoded translated auxiliary data (18) or encoded translated auxiliary data (18) and a logo or similar message applied to a very small portion of the frame (24), the extraction process comprising decoding the auxiliary data (18) from the video frames (24) by converting the video frames (24) into a series of DCT blocks, converting the series of DCT blocks into a plurality of levels, each level corresponding to one of a predefined list of levels and converting the plurality of levels, each level corresponding to one of a predefined list of levels, into the auxiliary data (18).

7. A method according to claim 6, and further comprising receiving a fingerprint frame, and thereby triggering the executing of the extraction process on the video frames (24).

8. A method according to claim 6 or 7, and further comprising, when executing the extraction process on the video frames (24), identifying in each frame (24) a portion indicating the start of said auxiliary data (18).

9. A system for handling a bitstream (12) comprising a receiver (44) arranged to receive a bitstream (12), said bitstream (12) comprising a plurality of encoded video frames (24), a video decoder (46) arranged to decode the video frames (24), a display device (48) arranged to display the video frames (24), and a processor (50) arranged to execute an extraction process on the video frames (24), each frame (24) consisting of encoded translated auxiliary data (18) or encoded translated auxiliary data (18) and a logo or similar message applied to a very small portion of the frame (24), the extraction process comprising decoding the auxiliary data (18) from the video frames (24) by converting the video frames (24) into a series of DCT blocks, converting the series of DCT blocks into a plurality of levels, each level corresponding to one of a predefined list of levels and converting the plurality of levels, each level corresponding to one of a predefined list of levels, into the auxiliary data (18).

## Patentansprüche

1. Verfahren zum Erzeugen eines Bitstroms (12), umfassend: Empfangen von Videodaten (16), Empfangen von Hilfsdaten (18), Übersetzen der Hilfsdaten (18) gemäß einem definieren Schema, wobei das definierte Schema ein Konvertieren der Hilfsdaten (18) in mehrere Ebenen, wobei jede Ebene einer von einer vordefinierten Liste mit Ebenen entspricht, und ein Konvertieren der mehreren Ebenen in eine vordefinierte Anzahl von DCT-Positionen, die in einem DCT-Block aufgenommen sind, umfasst, Codieren der übersetzten Hilfsdaten (18) als eines oder mehrerer Videorahmen (24), indem die konvertierten mehreren Ebenen in die DCT-Ebenen des Blocks eingegeben werden, wobei jeder Rahmen (24) aus den codierten übersetzten Hilfsdaten (18) oder den codierten übersetzten Hilfsdaten (18) und einem Logo oder einer ähnlichen Nachricht, das/die auf einen sehr kleinen Abschnitt des Rahmens (24) angewendet wird, besteht, und Kombinieren der Videodaten (16) und der codierten Videorahmen (24) zu einem Bitstrom (12).

2. Verfahren nach Anspruch 1 und ferner umfassend: Empfangen eines Fingerabdruckrahmens und, beim Kombinieren der Videodaten (16) und der codierten Videorahmen (24) zu einem Bitstrom (12), Aufnehmen des Fingerabdruckrahmens unmittelbar vor den codierten Videorahmen (24).

3. Verfahren nach einem vorhergehenden Anspruch und ferner umfassend: beim Codieren der übersetzten Hilfsdaten (18) als eines oder mehrerer Videorahmen (24), Aufnehmen in jedem Rahmen (24) eines Abschnitts, der den Beginn der Hilfsdaten (18) anzeigt.

4. Verfahren nach einem vorhergehenden Anspruch und ferner umfassend: beim Codieren der übersetzten Hilfsdaten, die Informationen zum Deaktivieren eines Benutzers umfassen, Überspringen des einen oder der mehreren Videorahmen (24), die die Hilfsdaten (18) umfassen.

5. Vorrichtung zum Erzeugen eines Bitstroms (12), umfassend: einen Videopuffer (14), der zum Empfangen von Videodaten (16) ausgelegt ist, eine Speichervorrichtung (20), die zum Empfangen von Hilfsdaten (18) ausgelegt ist, einen Prozessor (22), der zum Übersetzen der Hilfsdaten (18) gemäß einem definierten Schema, wobei das definierte Schema ein Konvertieren der Hilfsdaten (18) in mehrere Ebenen, wobei jede Ebene einer von einer vordefinierten Liste mit Ebenen entspricht, und ein Konvertieren der mehreren Ebenen in eine vordefinierte Anzahl von DCT-Positionen, die in einem DCT-Block aufgenommen sind, umfasst, und zum Codieren der übersetzten Hilfsdaten (18) als eines oder mehrerer Videorahmen (24), indem die konvertierten mehreren Ebenen in die DCT-Ebenen des Blocks eingegeben werden, wobei jeder Rahmen (24) aus den codierten übersetzten Hilfsdaten (18) oder den codierten übersetzten Hilfsdaten (18) und einem Logo oder einer ähnlichen Nachricht, das/die auf einen sehr kleinen Abschnitt des Rahmens (24) angewendet wird, besteht, ausgelegt ist, und einen Sender (26), der zum Kombinieren der Videodaten (16) und der codierten Videorahmen (24) zu einem Bitstrom (12) ausgelegt ist.

6. Verfahren zum Handhaben eines Bitstroms (12), umfassend: Empfangen eines Bitstroms (12), wobei der Bitstrom (12) mehrere codierte Videorahmen (24) umfasst, Ausführen eines Extraktionsprozesses an den Videorahmen (24), wobei jeder Rahmen (24) aus codierten übersetzten Hilfsdaten (18) oder codierten übersetzten Hilfsdaten (18) und einem Logo oder einer ähnlichen Nachricht, das/die auf einen sehr kleinen Abschnitt des Rahmens (24) angewendet wird, besteht, wobei der Extraktionsprozess ein Decodieren der Hilfsdaten (18) von den Videorahmen (24) durch Konvertieren der Videorahmen (24) in eine Reihe von DCT-Blöcken, Konvertieren der Reihe von DCT-Blöcken in mehrere Ebenen, wobei jede Ebene einer von einer vordefinierten Liste mit Ebenen entspricht, und Konvertieren der mehreren Ebenen, wobei jede Ebene einer von einer vordefinierten Liste mit Ebenen entspricht, in die Hilfsdaten (18) umfasst.

7. Verfahren nach Anspruch 6 und ferner umfassend:

Empfangen eines Fingerandruckrahmens, und dadurch Auslösen des Ausführens des Extraktionsprozesses an den Videorahmen (24).

8. Verfahren nach Anspruch 6 oder 7 und ferner umfassend:

beim Ausführen des Extraktionsprozesses an den Videorahmen (24), Identifizieren in jedem Rahmen (24) eines Abschnitts, der den Beginn der Hilfsdaten (18) anzeigt.

9. System zum Handhaben eines Bitstroms (12), umfassend:

einen Empfänger (44), der zum Empfangen eines Bitstroms (12) ausgelegt ist, wobei der Bitstrom (12) mehrere codierte Videorahmen (24) umfasst, einen Videodecoder (46), der zum Decodieren der Videorahmen (24) ausgelegt ist, eine Displayvorrichtung (48), die zum Anzeigen der Videorahmen (24) ausgelegt ist, und einen Prozessor (50), der zum Ausführen eines Extraktionsprozesses an den Videorahmen (24) ausgelegt ist, wobei jeder Rahmen (24) aus codierten übersetzten Hilfsdaten (18) oder codierten übersetzten Hilfsdaten (18) und einem Logo oder einer ähnlichen Nachricht, das/die auf einen sehr kleinen Abschnitt des Rahmens (24) angewendet wird, besteht, wobei der Extraktionsprozess ein Decodieren der Hilfsdaten (18) von den Videorahmen (24) durch Konvertieren der Videorahmen (24) in eine Reihe von DCT-Blöcken, Konvertieren der Reihe von DCT-Blöcken in mehrere Ebenen, wobei jede Ebene einer von einer vordefinierten Liste mit Ebenen entspricht, und Konvertieren der mehreren Ebenen, wobei jede Ebene einer von einer vordefinierten Liste mit Ebenen entspricht, in die Hilfsdaten (18) umfasst.

## Revendications

1. Procédé de création d'un flux binaire (12) comprenant de recevoir des données vidéo (16), recevoir des données auxiliaires (16), traduire lesdites données auxiliaires (18) selon un mécanisme défini, le mécanisme défini comprenant de convertir les données auxiliaires (18) en une pluralité de niveaux, chaque niveau correspondant à un d'une liste prédéfinie de niveaux et convertir la pluralité de niveaux en un nombre prédéterminé de positions DCT comprises dans un bloc DCT, coder les données auxiliaires traduites (18) comme une ou plusieurs trames vidéo (24) en insérant ladite pluralité de niveaux convertis dans les niveaux DCT du bloc, chaque trame (24) étant constituée des données auxiliaires traduites codées (18) ou des données auxiliaires traduites codées (18) et un logo ou un message similaire appliqué à une très petite portion de la trame (24) et combiner les données vidéo (16) et les trames vidéos codées (24) en un flux binaire (12).

2. Procédé selon la revendication 1 et comprenant en outre de recevoir une trame d'empreinte digitale et lors de la combinaison des données vidéos (16) et des trames vidéos codées (24) en un flux binaire (12), inclure ladite trame d'empreinte digitale immédiatement avant lesdites trames vidéos codées (24).

3. Procédé selon une quelconque des revendications précédentes et comprenant en outre, lors du codage des données auxiliaires traduites (18) comme une ou plusieurs trames vidéo (24), d'inclure dans chaque trame (24) une portion indiquant le début desdites données auxiliaires (18).

**4.** Procédé selon une quelconque des revendications précédentes et comprenant en outre, lors du codage des données auxiliaires traduites incluant une information pour désactiver un utilisateur, de sauter une ou plusieurs trames vidéo (24) comprenant lesdites données auxiliaires (18).

**5.** Dispositif pour créer un flux binaire (12) comprenant une mémoire tampon vidéo (14) agencée pour recevoir des données vidéo (16), un dispositif de mémorisation (20) agencé pour recevoir des données auxiliaires (18), un processeur (22) agencé pour traduire lesdites données auxiliaires (18) selon un mécanisme défini, le mécanisme défini comprenant de convertir les données auxiliaires (18) en une pluralité de niveaux, chaque niveau correspondant à un d'une liste prédéfinie de niveaux et convertir la pluralité de niveaux en un nombre prédéterminé de positions DCT comprises dans un bloc DCT, coder les données auxiliaires traduites (18) comme une ou plusieurs trames vidéo (24) en insérant ladite pluralité de niveaux convertis dans les niveaux DCT du bloc, chaque trame (24) étant constituée des données auxiliaires traduites codées (18) ou des données auxiliaires traduites codées (18) et un logo ou un message similaire appliqué à une très petite portion de la trame (24) et un émetteur (26) agencé pour combiner les données vidéo (16) et les trames vidéos codées (24) en un flux binaire (12).

**6.** Procédé de gestion d'un flux binaire (12) comprenant de recevoir un flux binaire (12), ledit flux binaire (12) comprenant une pluralité de trames vidéos codées (24), exécuter un processus d'extraction sur les trames vidéo (24), chaque trame (24) étant constituée de données auxiliaires traduites codées (18) ou de données auxiliaires traduites codées (18) et un logo ou un message similaire appliqué à une portion très petite de la trame (24), le processus d'extraction comprenant de décoder les données auxiliaires (18) provenant des trames vidéo (24) en convertissant les trames vidéo (24) en une série de blocs DCT, convertir les séries de blocs DCT en une pluralité de niveaux, chaque niveau correspondant à un d'une liste prédéfinie de niveaux et convertir la pluralité de niveaux, chaque niveau correspondant à un une liste prédéfinie de niveaux, en données auxiliaires (18).

**7.** Procédé selon la revendication 6 et comprenant en outre de recevoir une trame d'empreinte digitale et de déclencher ainsi l'exécution du processus d'extraction sur les trames vidéo (24).

**8.** Procédé selon la revendication 6 ou 7 et comprenant en outre, lors de l'exécution du processus d'extraction sur les trames vidéo (24), d'identifier dans chaque trame (24) une portion indiquant le début desdites donnés auxiliaires (18).

**9.** Système de gestion d'un flux binaire (12) comprenant un récepteur (44) agencé pour recevoir un flux binaire (12), ledit flux binaire (12) comprenant une pluralité de trames vidéos codées (24), un décodeur vidéo (46) agencé pour décoder les trames vidéo (24), un dispositif d'affichage (48) agencée pour afficher les trames vidéo (24) et un processeur (50) agencé pour exécuter un processus d'extraction sur les trames vidéos (24), chaque trame (24) étant constitué de données auxiliaires traduites codées (18) ou de données auxiliaire traduites codées (18) et un logo ou un message similaire appliqué à une portion très petite de la trame (24), le processus d'extraction comprenant de décoder les données auxiliaires (18) provenant des trames vidéo (24) en convertissant les trames vidéo (24) en une série de blocs DCT, convertir les séries de blocs DCT en une pluralité de niveaux, chaque niveau correspondant à un niveau d'une liste prédéfinie de niveaux et convertir la pluralité de niveaux, chaque niveau correspondant à un d'une liste prédéfinie de niveaux, en données auxiliaires (18).

Forward Prediction  Backward Prediction

| I | B | B | P | B | B | P | B | B | I | B | B | P | B | B | P |

0  1  2  3  4  5  6  7  8  9  10 11 12 13 14 15 ← camera and display order

0  3  1  2  6  4  5  9  7  8  12 10 11 15 13 14 ← transmission and decoding order

# FIG. 1

| 8 | 16 | 19 | 22 | 26 | 27 | 29 | 34 |
|---|----|----|----|----|----|----|----|
| 16 | 16 | 22 | 24 | 27 | 29 | 34 | 37 |
| 19 | 22 | 26 | 27 | 29 | 34 | 34 | 38 |
| 22 | 22 | 26 | 27 | 29 | 34 | 37 | 40 |
| 22 | 26 | 27 | 29 | 32 | 35 | 40 | 48 |
| 26 | 27 | 29 | 32 | 35 | 40 | 48 | 58 |
| 26 | 27 | 29 | 34 | 38 | 46 | 56 | 69 |
| 27 | 29 | 35 | 38 | 46 | 56 | 69 | 83 |

| 16 | 16 | 16 | 16 | 16 | 16 | 16 | 16 |
|----|----|----|----|----|----|----|----|
| 16 | 16 | 16 | 16 | 16 | 16 | 16 | 16 |
| 16 | 16 | 16 | 16 | 16 | 16 | 16 | 16 |
| 16 | 16 | 16 | 16 | 16 | 16 | 16 | 16 |
| 16 | 16 | 16 | 16 | 16 | 16 | 16 | 16 |
| 16 | 16 | 16 | 16 | 16 | 16 | 16 | 16 |
| 16 | 16 | 16 | 16 | 16 | 16 | 16 | 16 |
| 16 | 16 | 16 | 16 | 16 | 16 | 16 | 16 |

# FIG. 2a          FIG. 2b

FIG. 3

| 195 | 237 | 187 | 161 | 159 | 168 | 178 | 176 |
|-----|-----|-----|-----|-----|-----|-----|-----|
| 181 | 183 | 174 | 165 | 168 | 168 | 163 | 166 |
| 165 | 166 | 168 | 163 | 167 | 163 | 160 | 158 |
| 157 | 163 | 157 | 153 | 161 | 160 | 157 | 155 |
| 148 | 149 | 152 | 155 | 159 | 155 | 155 | 152 |
| 147 | 156 | 154 | 155 | 145 | 140 | 146 | 148 |
| 154 | 187 | 154 | 138 | 117 | 115 | 122 | 139 |
| 155 | 164 | 151 | 142 | 133 | 122 | 107 | 112 |

FIG. 4a

| DC | 60 | 18 | -14 | -17 | -21 | -13 | -6 |
|-----|-----|-----|-----|-----|-----|-----|-----|
| 114 | -19 | 11 | 13 | -11 | -3 | -2 | 4 |
| 9 | 54 | 25 | -11 | -14 | -15 | -8 | -9 |
| 22 | -4 | 18 | -11 | -10 | -3 | -11 | -5 |
| 5 | 3 | -1 | 9 | -6 | -5 | -3 | 0 |
| 5 | 14 | 22 | -12 | -14 | -10 | -10 | -6 |
| 5 | -4 | -10 | 3 | 0 | 4 | 0 | 3 |
| 0 | 3 | 4 | -4 | -3 | -2 | -2 | -1 |

FIG. 4b

FIG. 5

FIG. 6

18      30      32

```
┌─────────────────────────────────────────────┐
│  ┌──────────┐    ┌──────────┐    ┌──────────┐ │  22
│  │  amBX    │───▶│  level   │───▶│   DCT    │ │
│  │  data    │    │conversion│    │  blocks  │ │
│  └──────────┘    └──────────┘    └──────────┘ │
│                                        │       │
│   36      ┌──────────┐         ┌──────────┐ 34 │
│  scan ───▶│   VLC    │────────▶│   clip   │    │
│           │generation│◀────────│prevention│    │
│           └──────────┘         └──────────┘    │
│                │                  ▲      ▲      │
│                │                  q   Q_intra(m,n)
│  MPEG  38  ┌──────────┐                         │
│  headers──▶│multiplexer│──▶ MPEG stream         │
│           └──────────┘                          │
│                ▲      ▲                          │
│                q   Q_intra(m,n)                  │
└─────────────────────────────────────────────┘
```

Q subscript intra: $Q_{intra}(m,n)$

# FIG. 7

10     28     40     42

```
┌──────────┐     ___      ┌──────────┐      ┌──────────┐
│ ENCODER  │    (   )     │ STANDARD │      │          │
│ FUNCTION │───▶( o )────▶│  DISC    │─────▶│ DECODER  │
│          │    (___)     │  PLAYER  │      │          │
└──────────┘              └──────────┘      └──────────┘
```

◀───────────────────────────────────────▶
NO ALTERATIONS ALLOWED
BETWEEN THESE TWO POINTS

# FIG. 8

48

AUX — 18

40

DECODER

50
CPU
42

44     46

24

12

28

# FIG. 9

FIG. 10

FIG. 11

**EP 2 067 120 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9300769 A
- EP 0518616 A
- US 5940134 A
- EP 1204277 A2